Europäisches Patentamt

European Patent Office

Office européen des brevets

(11) Veröffentlichungsnummer: **0 188 663**
**B1**

(12) **EUROPÄISCHE PATENTSCHRIFT**

(45) Veröffentlichungstag der Patentschrift: **16.01.91**

(21) Anmeldenummer: **85112438.8**

(22) Anmeldetag: **02.10.85**

(60) Teilanmeldung 89200889.7 eingereicht am 02/10/85.

(51) Int. Cl.⁵: **G 11 B 23/03, G 11 B 23/033**

(54) **Tablett zur Aufnahme und Halterung einer steifen kreisförmigen Informationsplatte sowie Kombination eines solchen Tabletts mit einer Aufbewahrungskassette.**

(30) Priorität: **07.01.85 DE 3500323**

(43) Veröffentlichungstag der Anmeldung:
**30.07.86 Patentblatt 86/31**

(45) Bekanntmachung des Hinweises auf die Patenterteilung:
**16.01.91 Patentblatt 91/03**

(84) Benannte Vertragsstaaten:
**AT BE CH DE FR GB IT LI LU NL SE**

(56) Entgegenhaltungen:
**EP-A-0 112 966**   **FR-A-2 437 672**
**EP-A-0 129 292**   **FR-A-2 474 461**
**EP-A-0 164 788**   **FR-A-2 497 992**
**EP-A-0 170 957**   **FR-A-2 557 346**
**DE-B-1 103 045**   **US-A-2 550 251**
**DE-C- 144 596**    **US-A-2 848 106**
**FR-A-1 214 192**

**FUNKSCHAU, Nr. 21, 12 Oktober 1984, Seite 38;
München, DE T. KNOLL: "CD im Auto:
Mobilisierung"**

(73) Patentinhaber: **POLYGRAM GmbH**
**Glockengiesserwall 3**
**D-2000 Hamburg 1 (DE)**
(84) **DE**

(73) Patentinhaber: **Polygram International Holding B.V.**
**Gerrit van der Veenlaan 4**
**NL-3743 DN Baarn (NL)**
(84) **BE CH FR GB IT LI LU NL SE AT**

(72) Erfinder: **Grobecker, Hermann**
**Scheelenkamp 6**
**D-3008 Garben (DE)**
Erfinder: **Mestdagh, Gilbert Eduard**
**Bremstraat 29**
**Zonhoven (BE)**
Erfinder: **Ito, Masashi**
**9-2 Showaen Settsu**
**Osaka (JP)**

(74) Vertreter: **Schrijnemaekers, Hubert Joannes Maria et al**
**Internationaal Octrooibureau B.V. Prof. Holstlaan 6**
**NL-5656 AA Eindhoven (NL)**

Courier Press, Leamington Spa, England.

## Beschreibung

Die Erfindung bezieht sich auf ein Tablett zur Aufnahme und Halterung einer kreisförmigen Informationsplatte, versehen mit einer Griffleiste, einer Aufnahmewanne und Halterungen zum Fixieren der in die Aufnahmewanne einzubringenden Informationsplatte, wobei die Halterungen einander gegenüberliegend am Rand der Aufnahmewanne angeordnet sind und wobei eine der Halterungen im Bereich der Griffleiste angeordnet ist.

Aus der EP—A 0,129,292 ist ein Tablett dieser Art bekannt. Das bekannte Tablett ist mit einer Aufnahmewanne und mit drei radial federnden Halterungen zum Fixieren einer in die Aufnahmewanne eingebrachten Informationsplatte versehen. Das von Hand in die Aufnahmewanne bringen oder von Hand aus der Aufnahmewanne nehmen ist umständlich, wegen der Anwesenheit von gegeneinander einwirkenden federnden Halterungen. Das bekannte Tablett ist geeignet als Einlage für einen in EP—A 0,129,292 gezeigten Plattenspieler, der versehen ist mit einem umständlichen Freigabemechanismus mit drei Freigabestiften, die in Zusammenarbeit mit den drei federnden Halterungen eine in der Aufnahmewanne liegende Informationsplatte freigeben können.

Aus der EP—A 0,144,631 sind Elemente zur Aufnahme und Halterung einer kreisförmigen Informationsplatte bekannt, die mit einem in eine Aufbewahrungskassette einzubringenden Tablett mit einer Aufnahmewanne und mit Halterungen zum Fixieren der in die Aufnahmewanne einzubringenden Informationsplatte versehen sind. Solche Elemente bilden einen Einsatz für den Boden bzw. den Deckel der Ausbewahrungskassette, die, wie auch die Elemente selbst, als Kunststoffspritzgußteil ausgebildet sind. Die Elemente sind dabei aus dem Boden bzw. dem Deckel der Aufbewahrungskassette schwierig herausnehmbar; sie dienen damit nur dem Festhalten der Informationsplatte während der Aufbewahrung.

Weiterhin ist es aus "Funkschau", 21/1984, Seite 38, bekannt, für das berührungslose Handhaben von digitalen, optisch auslesbaren Audio-Platten (Compact-Discs) beim Laden bzw. Entladen von Audio-Spielern, von Halterungen Gebrauch zu machen, die U-förmig gestaltet sind und zwischen deren U-Schenkeln die zu handhabende Informationsplatte eingeklemmt ist. Für die Benutzung einer solchen, als Stecklade-Einschub zu bezeichnenden Halterung muß die Informationsplatte zunächst aus ihrer Aufbewahrungskassette herausgenommen und in die Halterung eingebracht werden. Die Handhabung einer Compact-Disc mittels solch einer Halterung ohne Fingerberührung ist schwierig.

Es ist Aufgabe der Erfindung, für das Handhaben von Informationsplatten im Zusammenhang mit dem Laden und Entladen einer Abspieleinrichtung eine Lösung zu schaffen, die die Handhabung der Informationsplatte bei Überführen von einer Aufbewahrungskassette in die Abspieleinrichtung erleichtert, wobei die Platte nicht berührt zu werden braucht und wobei nur ein einfacher Lade- bzw. Entlademechanismus zum Lösen der Informationsplatte erfordert ist.

Die gestellte Aufgabe ist erfindungsgemäß dadurch gelöst, daß die im Bereich der Griffleiste angeordnete Halterung mit einem Nocken versehen ist, der an einem federnden, parallel en der Griffleiste laufenden Bügel vorgesehen ist, während die übrigen Halterungen fest angeordnet sind, wobei das Tablett mit einer Ausnehmung versehen ist, in der sich der federnde, an dem Tablett befestigte Bügel befindet.

Durch die Einführung des Tabletts liegt die Informationsplatte während der Aufbewahrung im Tablett in einer Aufbewahrungskassette. Beim Überführen in eine Abspieleinrichtung braucht nur das Tablett mit der Hand erfaßt und aus der Kassette herausgenommen zu werden. Mittels der Griffleiste läßt sich das Tablett leicht erfassen und in den Lade- bzw. Entlademechanismus einführen. Mit dem Tablett wird die Informationseinrichtung überführt. Das Tablett hat damit eine doppelte Funktion, nämlich das Festhalten der Informationsplatte während der Aufbewahrung in der Aufbewahrungskassette und das berührungslose Überführen der Informationsplatte von der Kassette in die Abspieleinrichtung.

Durch das Haltern der Informationsplatte mittels der Halterungen des Tabletts gemäß der Erfindung, wird die Möglichkeit geschaffen, daß ein Lade- bzw. Entlademechanismus beim Einschieben des Tabletts in die Abspieleinrichtung die Platte von den Halterungen löst und in die Spielstellung bringt. Insbesondere wird mittels des federnden Nockens, der vom Lade- bzw. Entlademechanismus beiseite geschoben werden kann, die Informationsplatte während des Einschiebens freigegeben.

Dadurch, daß das Tablett mit einer Ausnehmung versehen ist, die sich im Bereich der federnd ausgebildeten Halterung befindet, kann der federnd angeordnete Nocken sich während der Einschiebebewegung leicht bewegen. Die Bauhöhe des Tabletts ist klein, weil der Nocken im Bereich des Tablettbodens angeordnet ist.

Nach einer Ausgestaltung der Erfindung ist vorgesehen, daß die Ausnehmung an der Seite der Aufnahmewanne eine bogenförmige Randbegrenzung hat, die sich etwa konzentrisch zur Mitte der einzubringenden Informationsplatte erstreckt. Die Informationsseite der Platte wird dabei geschützt, weil nämlich die Informationsseite der Platte während des Einschiebens in das Tablett nur mit ihrem äußeren Rand das Tablett berühren kann. Weiterhin hat diese Ausbildung der Randbegrenzung eine Versteifung des Bodens der Aufnahmewanne zur Folge. Die Informationsseite ist auch gegen eine Fingerberührung von der Unterseite der Bodenwanne her geschützt.

Nach einer weiteren Ausgestaltung der Erfindung ist vorgesehen, daß die bogenförmige Randbegrenzung durch eine zur Mitte eingezogene Aussparung unterbrochen ist, wobei sich diese Aussparung gegenüber dem federnden Nocken befindet. Die Aussparung bringt den Vorteil, daß ein Stift des Lade- bzw. Entlademechanismus in die Aussparung eindringt, die federnde Halterung zurückdrückt und damit die Platte lösen kann.

Nach einer weiteren Ausgestaltung der Erfindung ist vorgesehen, daß der Nocken in der Mitte des mit seinen Enden an der Griffleiste befestigten federnden Bügels angeordnet ist, wobei die Ausnehmung sich über die gesamte Breite und Tiefe des federnden Bügels hinaus erstreckt. Der federnde Bügel ist damit ausreichend elastisch und kann aus Kunststoff hergestellt sein.

Nach einer weiteren Ausgestaltung der Erfindung ist vorgesehen, daß der federnde Bügel in seinem mittleren Bereich gegen Federmittel abstützbar ist. Da die Federkraft des federnden Kunststoffbügels erlahmen kann, z.B. bei hohen Temperaturen, sorgen die federnden Mittel für eine ausreichende Abstützung bzw. ein ausreichendes Zurückschieben in die Abstützstellung.

Nach einer weiteren Ausgestaltung der Erfindung ist vorgesehen, daß die Federmittel durch einen zwischen seinen Enden eingespannten Federstab gebildet sind, der den federnden Bügel hinterlegt und gegen den sich der federnde Bügel im Bereich seines Nockens abstützt. Der Federstab schützt sowohl gegen eine Ermüdung der Federkraft des Kunststoffbügels als auch gegen negative Temperatureinflüsse. Der Federstab kann nachträglich eingefügt oder gleich beim Spritzen des Tabletts mit eingebettet werden.

Nach einer weiteren Ausgestaltung der Erfindung ist vorgesehen, daß die federnden Mittel als mit der Griffleiste verbundene Federnasen ausgebildet sind. Derartige Federnasen haben den Vorteil, daß das Tablett und die federnden Teile alle aus dem gleichen Material bestehen.

Nach einer weiteren Ausgestaltung der Erfindung ist vorgesehen, daß sich der federnde Bügel an der Randbegrenzung der ersten Ausnehmung abstützt. Die Lage des Nockens am federnden Bügel ist damit vor der Aufnahme der Platte immer genau definiert, so daß die Platte hinter ihm immer gut einrasten kann.

Nach einer weiteren Ausgestaltung der Erfindung ist vorgesehen, daß in dem Boden der Aufnahmewanne eine weitere U-förmig gestaltete Ausnehmung vorgesehen ist, die im Bereich der fest angeordneten Halterungen eine kelchförmige Aufweitung aufweist. Die weitere Ausnehmung hat den Sinn, die Platte gegenüber dem Drehtisch der Abspieleinrichtung freizulegen. Die kelchförmige Aufweitung hat dabei den Vorteil, daß die Schreib- bzw. Leseeinrichtung der Einrichtung sich frei von Teilen des Tablettes bewegen kann.

Nach einer weiteren Ausgestelung der Erfindung ist vorgesehen, daß das Tablett senkrecht zur Griffleiste verlaufende Führungsleisten aufweist, die zur Einschubführung dienen für das Zusammenspiel mit einem Lade- bzw. Entlademechanismus der Abspieleinrichtung. Mit Hilfe der Führungsleisten wird einerseits eine einwandfreie Führung beim Einschieben in die Einrichtung gewährleistet, andererseits werden fehlerhafte Einschiebbewegungen, beispielsweise durch eine um 180° gedrehte Position des Tabletts verhindert.

Nach einer weiteren Ausgestaltung der Erfindung ist vorgesehen, daß in das als Kunststoffspritzteil ausgebildete Tablett Lade- bzw. Entladeführungen eingebracht sind. Bei einer derartigen Ausbildung können ohne weiteres auch weitere Hilfsmittel am Tablett angeordnetwerden, die das Laden und Entladen erleichtern.

Die Erfindung bezieht sich außer auf die besondere Ausbildung des Tabletts auch auf eine Aufbewahrungskassette mit einem Tablett gemäß der Erfindung.

Die Erfindung bezieht sich auch auf eine Kombination einer aus Boden und Deckel bestehenden Aufbewahrungskassette mit einem Tablett gemäß der Erfindung.

Die Erfindung wird anhand der Zeichnungen näher erläutert. Es zeigen:

Fig. 1 eine Draufsicht auf ein als Tablett ausgebildetes Element und eine in dasselbe aufgenommene Informationsplatte,

Fig. 2 eine Ansicht des Elementes gemäß Pfeil II in Fig. 1,

Fig. 3 eine Seitenansicht des Elementes gemäß dem Pfeil III in Fig. 1,

Fig. 4 einen Schnitt durch das Element längs der Linie IV—IV nach Fig. 1,

Fig. 5 in vergrößertem Maßstab einen Teil des Elementes gemäß Linie V—V in Fig. 1 im Schnitt,

Fig. 6 eine Ansicht des Elementes in Richtung des Pfeiles VI in Fig. 1,

Fig. 7 einen Draufsicht auf die Bodenseite des Elementes nach Fig. 1,

Fig. 8 einen Schnitt durch das Element längs der Linie VIII—VIII in Fig. 7,

Fig. 9 eine Ansicht eines Teiles des Elementes in einer abgewandelten Ausführungsform,

Fig. 10 eine Ansicht eines anders ausgebildeten Teiles des Elementes nach Fig. 1 ohne Informationsplatte,

Fig. 11a eine Ansicht eines anders ausgebildeten Teiles des Elementes nach Fig. 1 ohne Informationsplatte,

Fig. 11b eine Ansicht eines federnden Bügels des Elementes nach Fig. 11a,

Fig. 12a eine Ansicht eines anders ausgebildeten Teiles des Elementes nach Fig. 1 ohne Informationsplatte,

Fig. 12b eine Ansicht eines federnden Bügels des Elementes nach Fig. 12a,

Fig. 13 einen Schnitt durch eine Kombination aus einer Aufnahmekassette und einem in ihr aufgenommenen Tablett zur Aufnahme einer Informationsplatte,

Fig. 14 eine Seitenansicht der Kombination nach Fig. 13,

Fig. 15 einen Ausschnitt aus der Aufnahmekassette im Bereich des Scharnieres zwischen Boden und Deckel, wobei der Deckel um 180° gegenüber dem Boden verschwenkt ist,

Fig. 16 die Scharnierausbildung nach Fig. 15, wobei der Deckel gegenüber dem Boden um mehr als 180° verschwenkt ist,

Fig. 17 eine Seitenansicht einer Kombination aus zwei gestapelten Elementen nach Fig. 1.

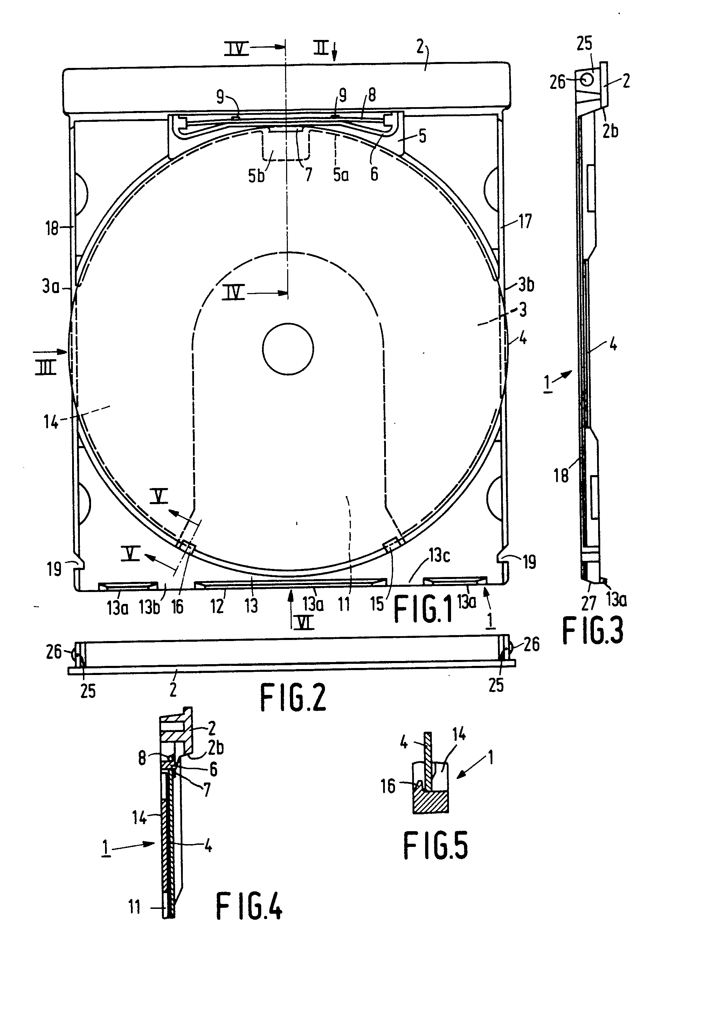

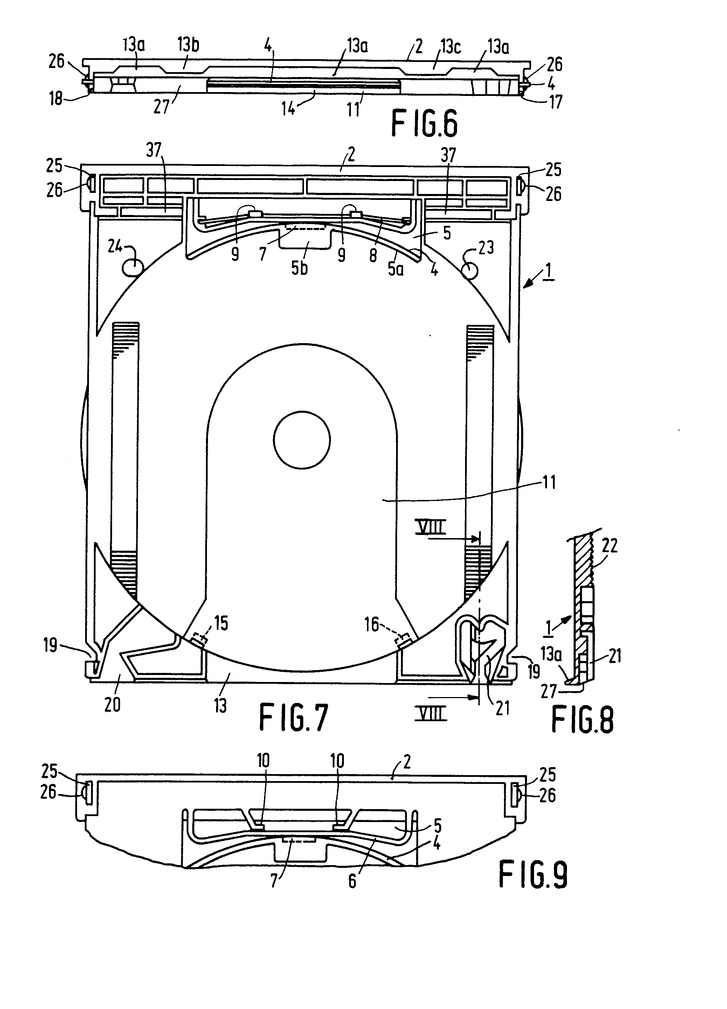

Wie die Draufsicht auf ein in Fig. 1 dargestelltes, als Tablett 1 ausgebildetes Element zeigt, besteht dieses Tablett 1 aus einer rechteckigen Platte mit einer Griffleiste 2 (vergl. auch Fig. 2, 3 und 4). Platte und Griffleiste sind aus Kunststoff gespritzt. Die Griffleiste ist vorzugsweise an ihrer Oberfläche gerippt, damit sie sich besser erfassen läßt. Dasselbe gilt für die Unterseite des Tabletts, insbesondere im Bereich der Griffleiste 2. Im Zentrum des Tabletts 1 ist eine Aufnahmewanne 3 vorgesehen, die etwas vertieft angeordnet ist und einem Umfang hat, der etwas größer ist als eine Informationsplatte 4. Die Informationsplatte ist in diesem Ausführungsbeispiel eine Compactdisc-Platte (eine digitale, optisch auslesbare Audioplatte). An den Seitenrändern 3a, 3b ist die Aufnahmewanne derart offen, daß der Rand der Informationsplatte mit der Hand leicht erfaßbar ist. Zwischen dem Rand der Aufnahmewanne 3 und der Griffleiste 2 ist eine erste Ausnehmung 5 vorgesehen. Diese erste Ausnehmung 5 hat eine bestimmte Breite. Innerhalb der ersten Ausnehmung 5 befindet sich ein aus Kunststoff gebildeter federnder Bügel 6, der vorzugsweise in das Tablett integriert ist. Die Enden des federnden Bügels 6 schließen an der Griffleiste an. In der Mitte des federnden Bügels ist ein als Halterung dienender Nocken 7 vorgesehen, der in Richtung auf das Zentrum des Tabletts weist. Durch die Elastizität des federnden Bügels wird der Nocken 7 nach innen gedrückt. Die Elastizität des federnden Bügels 6 wird unterstützt mittels eines Federstabes 8 (vergl. auch Fig. 7). Der Federstab 8 kann nachträglich eingesetzt werden oder beim Spritzen gleich mit eingebettet sein. Für das nachträgliche Einbringen des Federstabes 8 sind in den Füßen des federnden Bügels 6 vorzugsweise Einschubschlitze vorgesehen. Weiterhin sind am federnden Bügel 6 kleine Haltenocken 9 vorgesehen, mit denen der Federstab 8 positionierbar ist. Die erste Ausnehmung 5 ist zur Aufnahmewanne 3 hin begrenzt mittels einer bogenförmigen Randbegrenzung 5a. Diese Randbegrenzung 5a ist etwa deckend mit dem Plattenrand. In der Mitte der bogenförmigen Randbegrenzung 5a befindet sich gegenüber der Halterung 7 eine Aussparung 5b, die die bogenförmige Randbegrenzung 5a unterbricht. Die Aussparung 5b erstreckt sich in Richtung auf die Tablettmitte und hat eine etwa rechteckige Kontur. In diese Aussparung 5b kann ein Stift des Lademechanismus einer Abspieleinrichtung eingreifen.

Wie alternativ in Fig. 9 dargestellt ist, kann die federnde Unterstützung auch mit Hilfe von Kunststoff-Federnasen 10 erfolgen, die von der Griffleiste 2 her gegen die Rückseite des federnden Bügels 6 drücken. Die Federnasen 10 sind vorzugsweise zusammen mit dem Tablett gespritzt.

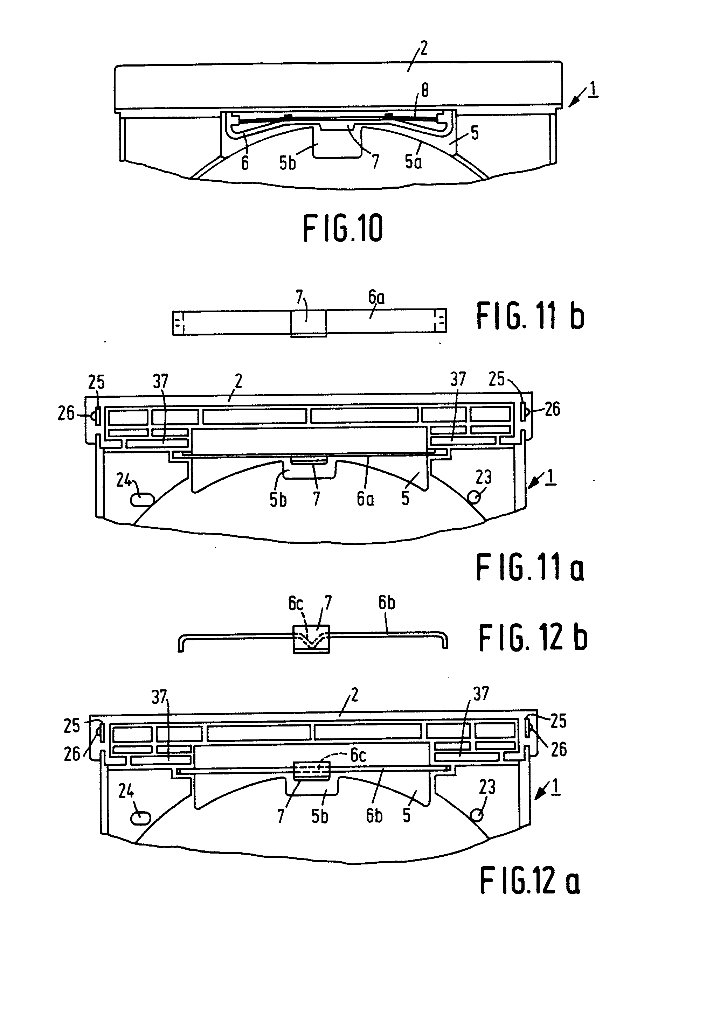

Fig. 10 zeigt eine weitere Variante der Anordnung des federnden Bügels 6, wobei, wenn keine Platte aufgenommen ist, der federnde Bügel durch den Federstab 8 gegen die bogenförmige Randbegrenzung 5a gedrückt wird, wodurch die Halterung 7 genau positioniert ist. Nach Aufnahme der Platte liegt der Bügel 6 vorzugsweise wieder frei von der Randbegrenzung 5a. In der Ausbildung nach Fig. 10, aber auch in den anderen Ausbildungen, ist es vorteilhaft, wenn die Oberseite der Halterung 7 eine schräge Kante aufweist. Diese schräge Kante soll das Aufnehmen der Platte 4 in die Aufnahmewanne 3 und das Festklemmen hinter der Halterung 7 erleichtern.

Fig. 11a und 11b zeigen, daß alternativ die Halterung 7 im mittleren Bereich einer Blattfeder 6a vorgesehen ist. Die Blattfeder 6a ist eine Metallfeder und bildet eine ausreichende Abstützung der Platte auch bei höheren Temperaturen. Die Halterung 7 besteht aus Kunststoff und ist an der Blattfeder gespritzt oder geklebt.

Wie in den Fig. 12a und 12b dargestellt, kann die Halterung 7 auch im mittleren Bereich einer Drahtfeder 6b vorgesehen sein. Hierbei ist es vorteilhaft, die Feder 6b im mittleren Bereich mit einer Durchbiegung 6c auszuführen und durch Umspritzen die Halterung anzubringen. Weiter kann alternativ auf nicht dargestellte Weise eine Schraubenfeder-Konstruktion statt einer Blatt- oder Drahtfeder benutzt werden.

Im Bereich der Aufnahmewanne 3 ist eine zweite Ausnehmung 11 vorgesehen, die U-förmig gestaltet und auf der von der Griffleiste abliegenden Seite kelchförmig an ihren Enden aufgeweitet ist. Das Tablett ist über die U-förmige Ausnehmung hinweg auf der der Griffleiste 2 gegenüberliegenden Seite 12 mit einer Brücke 13 versehen. Die Brücke dient der Verbesserung der Stabilität der Seite 12. Die Brücke 13 liegt, wie sich aus Fig. 6 ergibt, etwas höher als der Boden 14 der Aufnahmewanne 3. Die Brücke 13 weist einen Seitenrand 13a auf, der sich aufwärts erstreckt und mit Aussparungen 13b und 13c versehen ist.

Im Bereich der Öffnung der Ausnehmung 11 sind feste Halterungen 15 und 16 vorgesehen, die derart gegenüber dem Boden 14 angeordnet sind, daß die Platte 4 zwischen dem Boden 14 und den festen Halterungen 15, 16 festgeklemmt wird. Die festen Halterungen 15, 16 befinden sich im Bereich der Brücke 13. Die Ausbildung der festen Halterungen 15, 16 ist vergrößert dargestellt in Fig. 5.

Im Bereich der Seitenränder 3a, 3b sind Führungsleisten 17, 18 vorgesehen, die das Tablett seitlich begrenzen. Die Führungsleisten 17, 18 dienen der Einschußführung beim Einschieben des Tabletts 1 in den Lade- bzw. Entlademechanismus der Abspieleinrichtung. Da die Führungsleisten an der Unterseite des Tabletts 1 vorgesehen sind, verhindern sie ein fehlerhaftes Einschieben des Tabletts in den Lade- bzw. Entlademechanismus.

Im Bereich der seitlichen Führungsleisten 17, 18 sind erste Lade- bzw. Entladeführungen 19 vorgesehen, die Unterbrechungen der Führungsleisten 17, 18 darstellen. Der Lade- bzw. Entlademechanismus kann in diese ersten Lade- bzw. Entladeführungen 19 eingreifen und das Tablett damit einziehen bzw. herausstoßen. Wie Fig. 7 zeigt, gibt es weiterhin eine hakenförmige zweite Lade- bzw. Entladeführung 20, die einem ähnlichen Zweck dient. Gegenüber der hakenförmigen zweiten Lade- bzw. Entladeführung ist eine dritte Lade- bzw. Entladeführung 21 vorgesehen, die herzkurvenartig ausgebildet ist. Diese dritte Lade- bzw. Entladeführung 21, die in Fig. 8 zusätzlich noch im Schnitt dargestellt ist, dient vorzugsweise dazu, das Tablett in einer nicht dargestellten Sammelaufnahme festzuhalten, die nach dem Druck-druckprinzip arbeitet. Das bedeutet, daß das Tablett beim ersten Andruck verriegelt wird innerhalb der Sammelaufnahme und beim zweiten Drücken herausspringen kann. Weiterhin sind noch Zahnstangenführungen 22 vorgesehen, die in Einschubrichtung verlaufen und mit Rädern eines Einschubes zusammenarbeiten können. An der Bodenseite sind auch noch Positionierlöcher 23, 24 vorhanden. Das Positionierloch 23 ist dabei rund ausgebildet, während das Positionierloch 24 etwas länglich gestaltet ist. Mittels dieser Löcher kann das Tablett nach dem Ladevorgang in der Abspieleinrichtung sicher und genau positioniert werden.

An der Unterseite der Griffleiste 2 sind Lappen 25 vorgesehen, die etwa senkrecht von der Griffleiste abstehen. Da die Lappen 25 frei abstehen, sind sie etwas nachgiebig. An den Lappen 25 sind nach außen vorstehende Rastnocken 26 vorgesehen (Fig. 3 und 7).

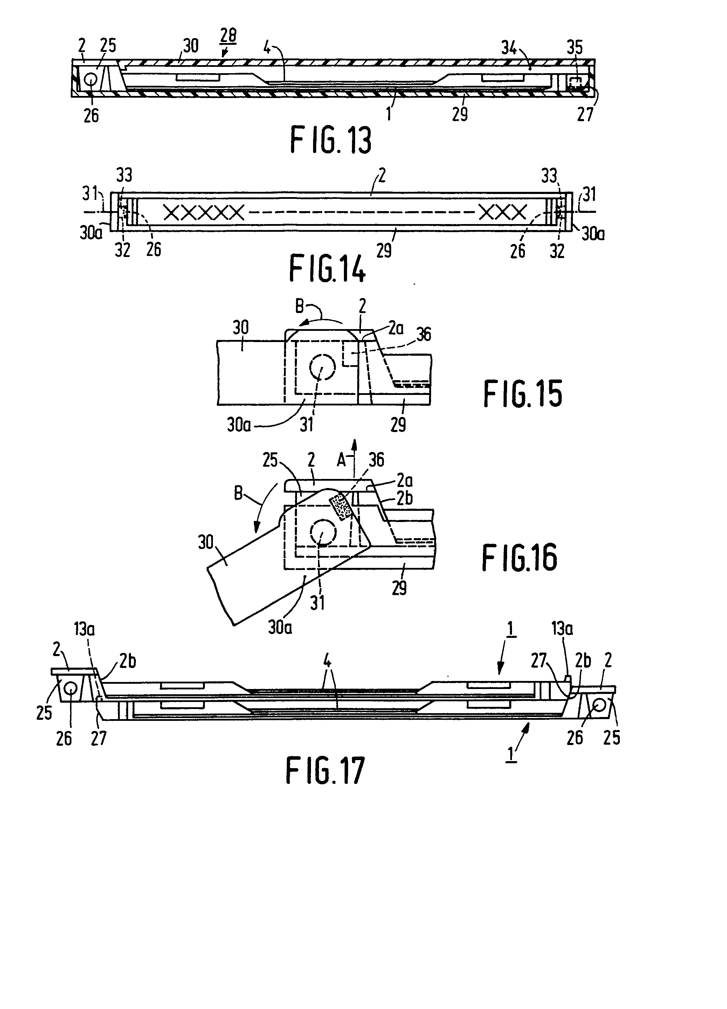

An der der Griffleiste 2 gegenüberliegenden Seite 12 des Tabletts 1 ist, wie in Fig. 3 dargestellt, eine schräge Kante 27 vorgesehen. Diese schräge Kante 27 soll das Einschieben des Tabletts in eine Aufnahmekassette 28 erleichtern (Fig. 13 und 14). Diese Aufnahmekassette 28 besteht aus einem Boden 29 und einem Deckel 30. Boden 29 und Deckel 30 sind mittels eine Scharnieres 31 schwenkbar miteinander verbunden. Das Scharnier 31 besteht aus Gelenköffnungen 32 im Bodenteil 29 und in diese Öffnungen 32 eingegreifenden Gelenkstiften 33, die an Auslegern 30a des Deckels vorgesehen sind. Ebenso wie die Gelenkstifte 33 greifen auch die Rastnocken 26 in die Gelenköffnungen 32 des Bodenteiles ein, und zwar an der von den Auslegern abgewandten Seite. Die Öffnungen 32 haben damit eine doppelte Funktion, nämlich einmal das Tablett in dem Boden 29 zu verrasten und andererseits den Deckel gelenkig am Boden festzuhalten.

Die Bodenseitenwände 34 sind mit Ansätzen 35 versehen, unter die die Führungsleisten 17, 18 greifen können. Das Tablett 1 ist damit auch an der von der Griffleiste 2 abliegenden Seite mit dem Boden 29 verbunden. Auch in den Bodenseiten wänden 34 sind seitliche Öffnungen vorgesehen, die das Ergreifen der Informationsplatte 4 erleichtern.

Auf den Innenseiten der Ausleger 30a sind Ausdrücknocken 36 vorgesehen. Die Seitenwände 34 müssen im Bereich der Öffnungen 32 etwas dünner ausgebildet sein, damit die Ausdrücknocken 36 beim Schwenken nicht behindert werden. Wie in Fig. 15 dargestellt, drücken die Ausdrücknocken 36 nach einem Schwenken über 180° gegen Stoßkanten 2a der Griffleiste 2, wodurch die Griffleiste und damit das Tablett aus dem Boden hochgedrückt wird in Richtung eines Pfeiles A in Fig. 16. Das Hochdrücken erfolgt bei einem Schwenken des Deckels 30 um einen Winkel von mehr als 180° gemäß Pfeil B in Fig. 16. Die Griffleiste 2 kann dann leicht mit der Hand erfaßt und mit dem Tablett 1 aus dem Boden 29 herausgenommen werden. Die Führungsleisten 17, 18, ziehen sich beim Hochheben aus dem Bereich der Ansätze 35 heraus. Das Tablett 1 ist damit frei.

Nach dem Herausheben des Tabletts mit der Platte 4 aus der Aufnahmekassette 28 kann das Tablett in den Lade- bzw. Entlademechanismus eingeschoben werden. Hierbei wird die Halterung 7 zurückgedrückt, und die Platte wird freigelegt.

Das Tablett hat damit eine doppelte Funktion, nämlich für das Festhalten der Informationsplatte und gleichzeitig als Ladehilfe für das Laden bzw. Entladen der Platte in der Abspieleinrichtung. Das Tablett gibt die Möglichkeit, die in einer üblichen Aufnahmekassette vorhandene Einlage zu ersetzen. Vorzugsweise besteht das Tablett 1 aus einer Mischung aus Kunststoffen, wie Polykarbonat. Dieser Werkstoff gibt dem Tablett eine gute Stabilität.

Die erfindungsgemässen Tabletts sind wie dargestellt in Fig. 17 stapelbar durch die Abstimmung der Geometrie von Ober- und Unterseite der Tabletts. Hierbei liegt die schräge Kante 27 des ersten Tabletts grenzend an einer schrägen Kante 2a der Griffleiste 2 des zweiten Tabletts nach gegenseitiger Versetzung der Tabletts um 180°. Der Seitenrand 13a des zweiten Tabletts steckt mit dem Mittenteil in der Ausnehmung 5 des ersten Tabletts, während die seitlichen Teile des Seitenrandes 13a in länglichen Aussparungen 37 stecken, die, wie in Fig. 7 dargestellt, an der Bodenseite jedes Tabletts vorhanden sind. Hierdurch ist eine gegenseitige Verschiebung der gestapelten Tabletts ausgeschloßen.

## Patentansprüche

1. Tablett zur Aufnahme und Halterung einer kreisförmigen Informationsplatte, versehen mit einer Griffleiste (2), einer Aufnahmewanne (3) und Halterungen zum Fixieren der in die Aufnahmewanne einzubringenden Informationsplatte, wobei die Halterungen einander gegenüberliegend am Rand der Aufnahmewanne angeordnet sind, und wobei eine der Halterungen im Bereich der Griffleiste angeordnet ist, dadurch gekennzeichnet, daß die im Bereich der Griffleiste angeordnete Halterung mit einem Nocken (7) versehen ist, der an einem federnden, parallel zu der Griffleiste laufenden Bügel (6) vorgesehen ist, während die übrigen Halterungen (15, 16) fest angeordnet sind, wobei das Tablett mit einer Ausnehmung (5) versehen ist, in der sich der federnde, an dem Tablett befestigte Bügel befindet.

2. Tablett nach Anspruch 1, dadurch gekennzeichnet, daß die Ausnehmung (5) an der Seite der Aufnahmewanne (3) eine bogenförmige Randbegrenzung (5a) hat, die sich etwa konzentrisch zur Mitte der einzubringenden Informationsplatte (4) erstreckt.

3. Tablett nach Anspruch 2, dadurch gekennzeichnet, daß die bogenförmige Randbegrenzung (5a) durch eine zur Mitte eingezogene Aussparung (5b) unterbrochen ist, wobei sich diese Aussparung (5b) gegenüber dem federnd angeordneten Nocken (7) befindet.

4. Tablett nach einem der Ansprüche 1 bis 3, dadurch gekennzeichnet, daß der Nocken (7) in der Mitte des mit seinen Enden an der Griffleiste befestigten federnden Bügels (6) angeordnet ist, wobei die Ausnehmung (5) sich über die gesamte Breite und Tiefe des federnden Bügels (6) hinaus erstreckt.

5. Tablett nach Anspruch 4, dadurch gekennzeichnet, daß der federnde Bügel als Metallfeder (6a; 6b) ausgebildet ist, an der im mittleren Bereich der Nocken (7) gespritzt ist.

6. Tablett nach Anspruch 4, dadurch gekennzeichnet, daß der federnde Bügel (6) in seinem mittleren Bereich gegen Federmittel (8, 10) abstützbar ist.

7. Tablett nach Anspruch 6, dadurch gekennzeichnet, daß die Federmittel durch einen zwischen seinen Enden eingespannten Federstab (8) gebildet sind, der den federnden Bügel (6) hinterlegt und gegen den sich der federnde Bügel (6) im Bereich seines Nockens (7) abstützt.

8. Tablett nach Anspruch 6, dadurch gekennzeichnet, daß die Federmittel als mit der Griffleiste (2) verbundene Federnasen (10) ausgebildet sind.

9. Tablett nach den Ansprüchen 2 und 4, dadurch gekennzeichnet, daß sich der federnde Bügel (6) and der Randbegrenzung (5a) der Ausnehmung (5) abstützt.

10. Tablett nach einem der Ansprüche 1 bis 9, dadurch gekennzeichnet, daß in dem Boden der Aufnahmewanne (3) eine weitere, U-förmig gestaltete Ausnehmung (11) vorgesehen ist, die im Bereich der fest angeordneten Halterungen (15, 16) eine kelchförmige Aufweitung aufweist.

11. Tablett nach einem der vorhergehenden Ansprüche, dadurch gekennzeichnet, daß senkrecht zur Griffleiste (2) verlaufende Führungsleisten (17, 18) vorgesehen sind, die zur Einschubführung dienen für das Zusammenspiel mit einem Lade- bzw. Entlademechanismus einer Abspiel einrichtung.

12. Tablett nach Anspruch 11, dadurch gekennzeichnet, daß das Tablett ein Kunststoffspritzteil ist, in dem Lade- bzw. Entladeführungen (19, 20, 21, 22) eingebracht sind.

13. Tablett nach einem der Ansprüche 1 bis 12, dadurch gekennzeichnet, daß im Boden des Tabletts (1) im Bereich der Ausnehmung (5) längliche Aussparungen (37) vorhanden sind, die Oberseite des Tabletts auf der der Griffleiste (2) gegenüberliegenden Seite (12) einen sich aufwärts erstreckenden Seitenrand (13a) mit seitlichen Teilen aufweist und durch Abstimmung der Geometrie von Ober- und Unterseite jedes Tabletts, nach gegenseitiger Versetzung um 180° die Tabletts stapelbar sind, wobei nach dem Stapeln die seitlichen Teile (13a) eines ersten Tabletts in den länglichen Aussparungen (37) eines zweiten Tabletts stecken.

14. Tablett nach einem der vorhergehenden Ansprüche, dadurch gekennzeichnet, daß das Tablett (1) aus einem wärmebeständigen Kunststoff besteht, der überwiegend Polykarbonat enthält.

15. Aufbewahrungskassette (28) mit einem Tablett (1) nach einem der vorhergehenden Ansprüche.

**Revendications**

1. Plateau destiné à recevoir et à maintenir un disque d'information circulaire, pourvu d'une moulure faisant office de poignée, appelée ci-après "poignée" (2), d'un logement récepteur (3) et de fixations pour fixer le disque d'information à introduire dans le logement, les fixations étant disposées, en opposition l'une à l'autre, au bord du logement et une des fixations étant située dans la zone de la poignée, caractérisé en ce que la fixation montée dans la zone de la poignée est pourvue d'une saillie (7) qui est prévu sur un étrier à ressort (6) s'étendant parallèlement à la poignée, tandis que les autres fixations (15, 16) sont montées fixes, le plateau étant pourvu d'un évidement (5) dans lequel est placé l'étrier à ressort fixé à ce plateau.

2. Plateau suivant la revendication 1, caractérisé en ce que l'évidement (5) présente, du côté du logement récepteur (3), un rebord en arc de cercle (5a) qui s'étend en substance concentriquement au centre du disque d'information (4) à introduire.

3. Plateau suivant la revendication 2, caractérisé en ce que le rebord arqué (5a) est interrompu par une découpe (5b) dirigée vers le centre, cette découpe (5b) se trouvant en face de la saillie à ressort (7).

4. Plateau suivant l'une quelconque des revendications 1 à 3, caractérisé en ce que la saillie (7) est disposée au milieu de l'étrier à ressort (6) fixé par ses extrémités à la poignée, tandis que l'évidement (5) s'étend au-delà de la largeur et de la profondeur de l'étrier à ressort (6).

5. Plateau suivant la revendication 4, caractérisé en ce que l'étrier à ressort à la forme d'un ressort métallique (6a; 6b) sur la zone médiane duquel la saillie (7) est moulée par injection.

6. Plateau suivant la revendication 4, caractérisé en ce que l'étrier à ressort (6) prend appui dans sa zone médiane contre des moyens à ressort (8, 10).

7. Plateau suivant la revendication 6, caractérisé en ce que les moyens à ressort sont formés par une tige de ressort (8) bloquée entre ses extrémités, qui est disposée derrière l'étrier à ressort (6) et qui prend appui contre l'étrier à ressort (6) dans la zone de sa saillie (7).

8. Plateau suivant la revendication 6, caractérisé en ce que les moyens à ressort sont formés par des talons à ressort (10) reliés à la poignée (2).

9. Plateau suivant les revendications 2 et 4, caractérisé en ce que l'étrier à ressort (6) prend appui contre le rebord (5a) du premier évidement (5).

10. Plateau suivant l'une quelconque des revendications 1 à 9, caractérisé en ce que dans le fond du logement récepteur (3) est prévu un autre évidement en U (11) qui présente un évasement en forme de tulipe dans la zone des fixations rigides (15, 16).

11. Plateau suivant l'une quelconque des revendications précédentes, caractérisé en ce que des bandes de guidage (17, 18) perpendiculaires à la poignée (2), qui servent de guide d'entrée pour la coopération avec un mécanisme de chargement ou de déchargement d'un lecteur, sont prévues.

12. Plateau suivant la revendication 11, caractérisé en ce que qu'il est constitué d'une pièce moulée par injection en matière plastique, dans laquelle sont ménagés des guides de chargement ou de déchargement (19, 20, 21, 22).

13. Plateau suivant l'une quelconque des revendications 1 à 12, caractérisé en ce que la face inférieure du plateau (1) présente des découpes oblongues (37) dans la zone de l'évidement (5), la face supérieure du plateau présentant, du côté (12) opposé à la poignée (2), un bord latéral (13a) s'étendant vers le haut et présentant des parties latérales et, l'adaptation mutuelle des géométries des faces supérieure et inférieure de chaque plateau permettant, après un décalage réciproque de 180°, d'empiler les plateaux, auquel cas, après l'empilage, les parties latérales (13a) d'un premier plateau sont engagées dans les découpes oblongues (37) d'un second plateau.

14. Plateau suivant l'une quelconque des revendications précédentes, caractérisé en ce que ce plateau (1) est constitué d'une matière plastique résistant à la chaleur qui contient principalement des polycarbonates.

15. Etui de rangement (28) comportant un plateau (1) suivant l'une quelconque des revendications précédentes.

**Claims**

1. A tray for receiving and retaining a circular information disc, which tray comprises a grip member (2), a receptacle (3) and retaining elements for retaining the information disc to be inserted into the receptacle, the retaining elements being arranged opposite each other at the edge of the receptacle, and one of the retaining elements being arranged near the grip member, characterised in that the retaining element arranged near the grip member comprises a projection (7) provided on a resilient member (6) which extends parallel to the grip member and the other retaining elements (15, 16) are fixedly arranged, the tray being formed with a recess (5) in which the resilient member, which is secured to the tray, is situated.

2. A tray as claimed in Claim 1, characterised in that at the side of the receptacle (3) the recess (5) has an arcuate bounding edge (5a) which is substantially concentric with the information disc (4) to be inserted.

3. A tray as claimed in Claim 2, characterised in that the arcuate bounding edge (5a) has a portion (5b), said receding portion (5b) facing the resiliently supported projection (7).

4. A tray as claimed in any one of the Claims 1 to 3, characterised in that the projection (7) is arranged in the centre of the resilient member (6) which has its ends secured to the grip member, the recess (5) extending over the entire width and depth of the resilient member (6).

5. A tray as claimed in Claim 4, characterised in that the resilient member is constructed as a metal spring (6a; 6b) on which the projection (7) is moulded in the central area.

6. A tray as claimed in Claim 4, characterised in that in its central area the resilient member (6) can bear against spring means (8, 10).

7. A tray as claimed in Claim 6, characterised in that the spring means comprise a spring rod (8) which is clamped in at its ends, which is arranged behind the resilient member (6) and which bears against the resilient member (6) at the location of its projection (7).

8. A tray as claimed in Claim 6, characterised in that the spring means are constructed as resilient projections (10) connected to the grip member (2).

9. A tray as claimed in Claims 2 and 4, characterised in that the resilient member (6) bears against the bounding edge (5a) of the recess (5).

10. A tray as claimed in any one of the Claims 1 to 9, characterised in that the bottom of the receptacle (3) is formed with a further U-shaped recess (11) having a bell-shaped widened portion at the location of the fixedly arranged retaining elements (15, 16).

11. A tray as claimed in any one of the preceding Claims, characterised in that there are provided guide strips (17, 18) which extend perpendicularly to the grip member and which provide insertion guidance for the cooperation with a loading and unloading mechanism of a playing device.

12. A tray as claimed in Claim 11, characterised in that the tray is a moulded plastics part formed with loading and unloading guides (19, 20, 21, 22).

13. A tray as claimed in any one of the Claims 1 to 12, characterised in that at the location of the recess (5) the bottom of the tray (1) is formed with elongate recesses (37), the upper side of the tray, at the side (12) facing the grip member (2), is formed with an upwardly extending lateral edge (13a) having lateral portions, and by adapting the geometries of the upper side and the lower side of each tray the trays can be stacked after they have been turned through 180° relative to one another, the lateral portions (13a) of a first tray engaging the elongate recesses (37) of a second tray after stacking.

14. A tray as claimed in any one of the preceding Claims, characterised in that the tray (1) is

EP 0 188 663 B1

made of a heat-proof plastics predominantly consisting of a polycarbonate.

15. A storage cassette (28) comprising a tray (1) as claimed in any one of the preceding Claims.

8

EP 0 188 663 B1

FIG.1

FIG.2

FIG.3

FIG.4

FIG.5

FIG.6

FIG.7

FIG.8

FIG.9

FIG.10

FIG. 11 b

FIG.11 a

FIG. 12 b

FIG.12 a

FIG.13

FIG.14

FIG.15

FIG.16

FIG.17

4